# EUROPÄISCHE PATENTSCHRIFT

(11) **EP 1 953 437 B1**
(45) Veröffentlichungstag und Bekanntmachung des Hinweises auf die Patenterteilung: **12.03.2014**
(21) Anmeldenummer: 08150850.9
(22) Anmeldetag: 30.01.2008
(51) Int. Cl.: F16L 3/223

(54) **Verbindungsanordnung eines Systems an einer Endplatte**
Fastening assembly of a system to an end plate
Ensemble de fixation d'un système à une plaque terminale

(30) Priorität: 30.01.2007 DE 102007004608
(43) Veröffentlichungstag der Anmeldung: 06.08.2008
(73) Patentinhaber: Gealan Formteile GmbH, 95145 Oberkotzau (DE)
(72) Erfinder: Pöhlmann, Thomas, 95233 Helmbrechts (DE); Schaller, Stefan, 95111 Rehau (DE); Saunus, Christian, 08223 Grünbach (DE)
(74) Vertreter: Fleuchaus, Michael A.

(56) Entgegenhaltungen:
- EP-A1- 0 671 580
- FR-A1- 2 626 651
- US-A- 3 894 706

## Beschreibung

Die Erfindung betrifft eine Anordnung mit einem Verbindungsmodul zur Verbindung eines Systems an einer Endplatte mit einem Sicherheitselement und einem Zwischenelement.

Verbindungsmodule zur Verbindung eines Systems an eine Endplatte sind seit längerem aus der Praxis bekannt. Beispielsweise können solche Systeme medienführende Leitungssysteme sein, welche in Anlagen wie Heizungen oder Wasserverteilsystemen verwendet werden. In bekannten medienführenden Anlagen werden zur Verbindung von Systemen, wie z. B. Plattenwärmetauschern, mit dem Gehäuse der Anlage häufig Schraubverbindungen oder Clipverbindungen verwendet.

Die Gehäuse dieser Anlagen und der Leitungssysteme sind in der Regel standardisiert, um in definierte Umgebungsbedingungen eingebracht werden zu können. Häufig müssen solche die Leitungssysteme auf kleine Räume beschränkt werden, so dass die Zugänglichkeit des Leitungssystems beschränkt ist und standardisierte Verbindungen, wie z. B. Schraubverbindungen oder Clipverbindungen, schlecht zugänglich sind.

Des Weiteren werden bei den bekannten Verbindungsmodulen häufig verlorene Teile des Verbindungsmoduls nicht mit Originalteilen ersetzt, so dass häufig ein Service oder eine Reparatur der mittels Fremdteilen erfolgt. Diese eingesetzten Fremdteile, wie z. B. zu lange Schrauben, verursachen Undichtigkeit oder teilweise sogar den Funktionsverlust im Gesamtsystem. Ferner sind die verwendeten Verbindungsmodule häufig nicht verliersicher mit den Anlagen verbunden und können bei der Montage oder Demontage im Bauraum verloren gehen.

Eine Anordnung, die dem Oberbegriff des Anspruchs 1 entspricht, ist aus US 3 894 706 A bekannt.

Der vorliegenden Erfindung liegt nunmehr die Aufgabe zugrunde, ein Verbindungsmodul zur Verbindung eines Systems an eine Endplatte der eingangs genannten Art bereitzustellen, bei dem eine besonders einfache und sichere Montage gegeben ist.

Erfindungsgemäß wird die voranstehende Aufgabe durch eine Anordnung mit den Merkmalen des Patentanspruchs 1 gelöst. Danach ist das in Rede stehende Verbindungsmodul derart ausgestaltet und weitergebildet, dass das Sicherungselement in ein im Wesentlichen geschlossenes Profil einschiebbar ist und dass durch den Kontakt zwischen dem Sicherungselement, einem Zwischenelement und der Endplatte ein geschlossener Kraftschluss aufbaubar ist, welcher die Endplatte auf eine Funktionsfläche des Systems drückt.

In erfindungsgemäßer Weise ist erkannt worden, dass man in Abkehr von der bisherigen Praxis die Befestigung eines Systems an einer Endplatte vereinfachen muss, um die Montage zu vereinfachen und die Betriebssicherheit der Anlage zu vereinfachen. Dazu wird in besonders einfacher und dennoch raffinierter Weise das Sicherungselement in ein geschlossenes Profil geschoben, so dass ein Kontakt zwischen dem Sicherungselement, einem Zwischenelement und der Endplatte dadurch erfolgt, dass die Innenplatte auf eine Funktionsfläche des Systems drückt. Die Anlage ist dadurch werkzeugfrei bedienbar, wodurch eine besondere Wartungsfreundlichkeit gegeben ist und das Verbindungsmodul flexibel und anwendungsspezifisch eingesetzt werden kann.

Hinsichtlich einer besonders einfachen Ausgestaltung könnte das Sicherungselement keilförmig ausgestaltet werden. Das keilförmige Sicherungselement könnte dann in das im Wesentlichen geschlossene Profil, das vorzugsweise am System angeordnet ist, einschiebbar sein. Somit würde die Funktion des Sicherungssystems auf dem Prinzip der Keilwirkung basieren. Schiebt man das Sicherungselement in das im Wesentlichen geschlossene Profil, so kontaktiert dieses ab einem gewissen Punkt das Zwischenelement, welches dann seinerseits auf die Endplatte Druck ausübt. Dieser Druck fixiert die Endplatte auf einer Funktionsfläche des Systems. Das System könnte hierbei ein medienführendes Leitungssystem, beispielsweise ein Plattenwärmetauscher, sein, oder aber ein Adapterelement, welches dann wiederum mit einem medienführenden Leitungssystem verbindbar ist.

Es wäre von besonderem Vorteil, wenn die mit dem Sicherungselement zusammenwirkende Seite des Zwischenelements in einem Winkel zu den angrenzenden Seiten des Zwischenelements angeordnet ist, der von 90° abweicht. Hierdurch ist es möglich, die benötigte Anpresskraft zur Funktionssicherung und Festlegung des Systems über verschiedene Keilwinkel einzustellen. Das Zwischenelement kann also an die Keilförmigkeit des Sicherungselements angepasst werden.

Im Hinblick auf eine besonders sichere Ausgestaltung könnte das Sicherungselement einen Feststellmechanismus zur Positionssicherung aufweisen. Durch diesen Feststellmechanismus könnte man das Sicherungselement in einer Position festgelegt werden. Vorzugsweise ist das Sicherungselement als Rastelement ausgestaltet, das in weiter vorteilhafter Weise mit einem Gegenstück zusammenwirkt, das vorzugsweise am System angeordnet ist. Diese Art des Feststellmechanismus ist besonders einfach bedienbar und auch an schwer zugänglichen Stellen in der Anlage bedienbar. Somit könnte die Position des Sicherungselements in Bezug auf das System, die Endplatte, das Zwischenelement und somit die gesamte Anlage während des Betriebes sichergestellt werden, so dass ein funktionssicheres Betreiben der Anlage ermöglicht ist.

Es wäre von besonderem Vorteil, wenn das Zwischenelement mit der Endplatte verbindbar wäre. Dies könnte durch einen einfachen Klickverschluss erfolgen, bei dem das Zwischenelement zwei flexible Schenkel aufweist, die in eine Öffnung in der Endplatte einrastbar sind. Das Zwischenelement könnte jedoch auch ein integraler Bestandteil der Endplatte sein. Die Endplatte selbst könnte ein Element sein, das mit dem Gehäuse einer Anlage verbindbar ist. In einer alternativen Ausgestaltung könnte sie jedoch auch integraler Bestandteil des Gehäuses der Anlage sein.

Zur Vereinfachung der Herstellbarkeit könnte das Sicherungselement und/oder das Zwischenelement und/oder die Endplatte und/oder das System aus Kunststoff und/oder Metall bestehen.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung eines bevorzugten Ausführungsbeispiels eines erfindungsgemäßen Verbindungsmoduls anhand der Zeichnung zu verweisen. In Verbindung mit der Erläuterung des bevorzugten Ausführungsbeispiels anhand der Zeichnung werden auch im Allgemeinen bevorzugte Ausgestaltungen und Weiterbildungen der Lehre erläutert. Dabei zeigen:
- Fig. 1: in einer schematischen, perspektivischen Ansicht, ein Ausführungsbeispiel eines erfindungsgemäßen Verbindungsmoduls im unmontierten Zustand,
- Fig. 2: in einer schematischen Draufsicht das Ausführungsbeispiel der Fig. 1 im montierten Zustand,
- Fig. 3: in einer schematischen Seitenansicht das Ausführungsbeispiel der Fig. 1 im montierten Zustand,
- Fig. 4: in einer schematischen Schnittansicht entlang der Schnittebene A-A das Ausführungsbeispiel der Fig. 2 und
- Fig. 5: in einer schematischen Schnittansicht entlang der Schnittebene B-B das Ausführungsbeispiel der Fig. 2.

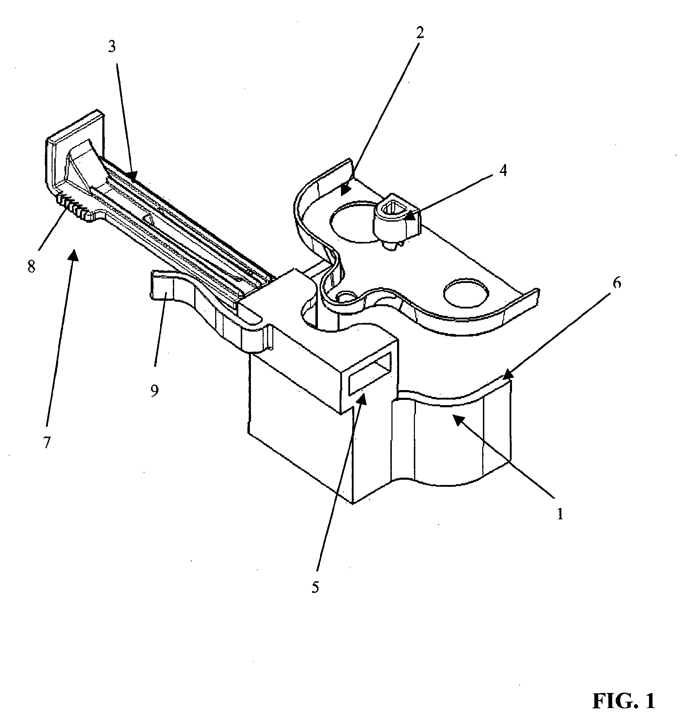

Ein erfindungsgemäßes Verbindungsmodul zur Verbindung eines Systems 1 an eine Endplatte 2 mit einem Sicherungselement 3 und einem Zwischenelement 4 ist in Fig. 1 dargestellt. In erfindungsgemäßer Weise ist das Sicherheitselement 3 in ein im Wesentlichen geschlossenes Profil 5 einschiebbar. In diesem Ausführungsbeispiel ist das im Wesentlichen geschlossene Profil 5 am System 1 angeordnet. Durch den Kontakt zwischen dem Sicherungselement 3, dem Zwischenelement 4 und der Endplatte 2 ist dadurch ein geschlossener Kraftfluss aufbaubar, dass die Endplatte 2 auf eine Funktionsfläche 6 des Systems 1 drückt. Das System ist in diesem Ausführungsbeispiel lediglich teilweise dargestellt und ist ein Wärmetauscher ausgestaltet, der in eine Heizungsanlage einbaubar ist.

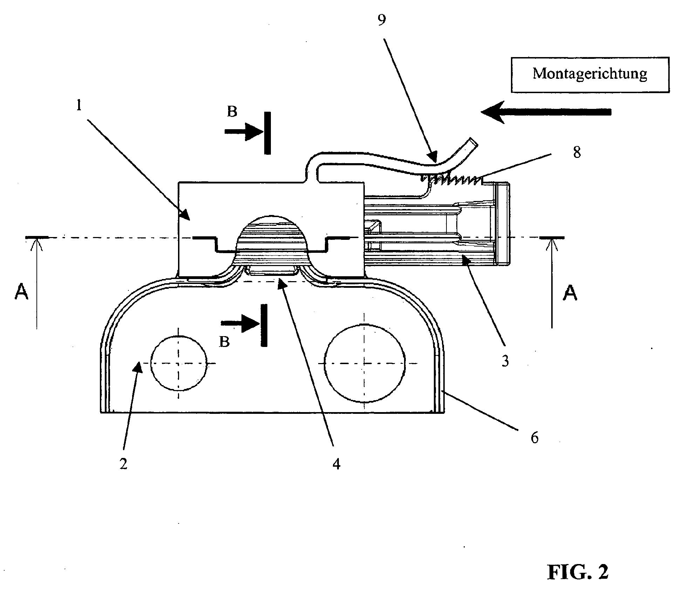

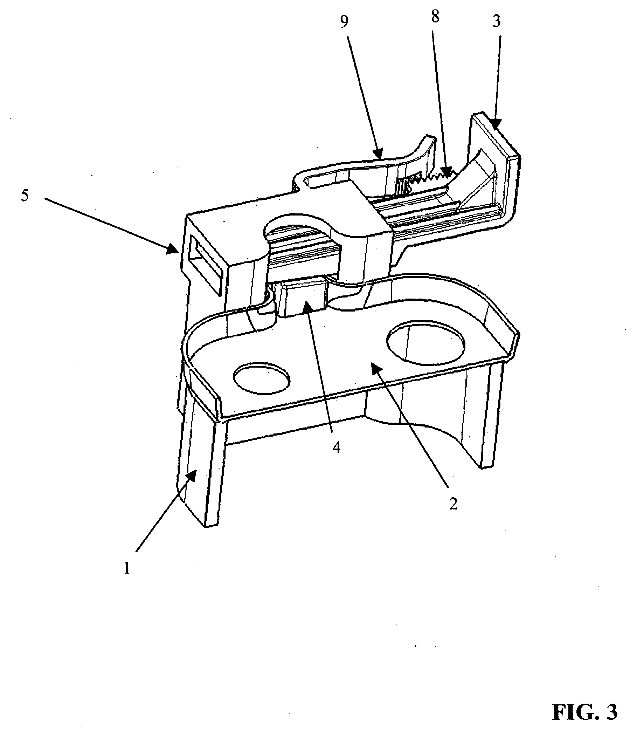

In Fig. 1 ist die erfindungsgemäße Anordnung im unmontierten Zustand gezeigt, während in den Fig. 2 bis 5 die Anordnung im montierten Zustand dargestellt ist.

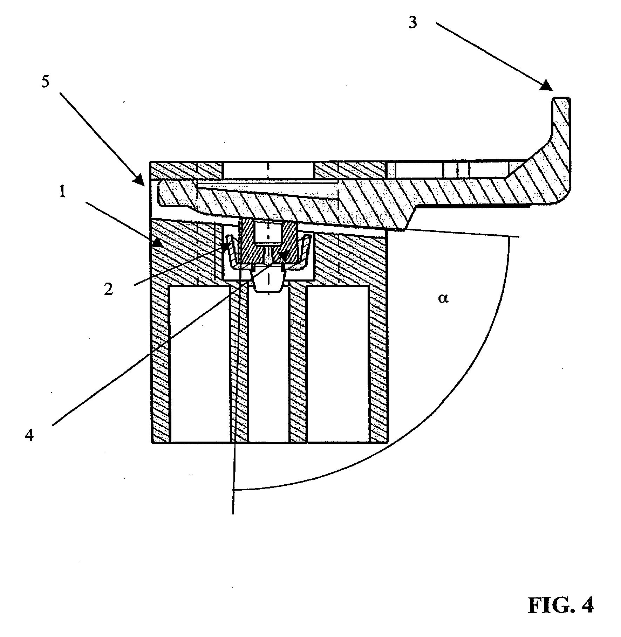

Das Sicherungselement 3 ist in diesem Ausführungsbeispiel keilförmig ausgebildet, wobei die schiefe Ebene des Keils auf der der Endplatte zugewandten Seite des Sicherungselements 3 ausgebildet ist. Die mit dem Sicherungselement 3 zusammenwirkende Seite des Zwischenelements 4 in einem Winkel α zu den angrenzenden Seiten des Elements 4 angeordnet, der von 90° abweicht. Dies ist in Fig. 4 sichtbar. Über diese Keilfläche des Zwischenelements 4 ist auf besonders einfache Weise eine gute Kontaktkraft erzeugbar.

Das Sicherungselement 3 weist einen Feststellmechanismus 7 zur Positionssicherung auf. In diesem Ausführungsbeispiel ist der Feststellmechanismus als Rastelement 8 ausgestaltet, das mit einem Gegenstück 9 zusammenwirkt, das am System 1 angeordnet ist.

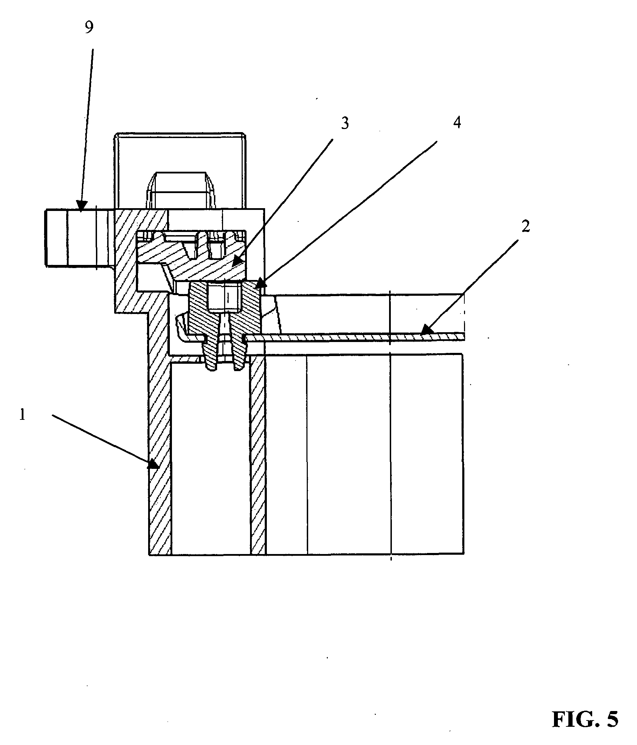

In Fig. 5 ist ersichtlich, dass das Zwischenelement 4 mit der Endplatte 2 verbindbar ist und zwar in der Weise, dass in der Endplatte 2 ein Loch vorgesehen ist, in welches das Zwischenelement 4 mittels zweier flexibler Schenkel, die am Zwischenelement 4 angeordnet sind, an der Endplatte 2 einklickbar ist.

Hinsichtlich weiterer Details wird zur Vermeidung von Wiederholungen auf die allgemeine Beschreibung verwiesen.

Schließlich sei ausdrücklich daraufhingewiesen, dass das voranstehend beschriebene Ausführungsbeispiel lediglich zur Erörterung der beanspruchten Lehre dient, diese jedoch nicht auf das Ausführungsbeispiel einschränkt.

## Patentansprüche

1. Anordnung umfassend ein System (1), eine Endplatte (2) und ein Verbindungsmodul zur Verbindung des Systems (1) mit der Endplatte (2) aufweisend:
ein an dem System (1) angeordnetes, geschlossenes Profil (5), ein Sicherungselement (3) und ein an der Endplatte (2) angebrachtes Zwischenelement (4),
wobei
das Sicherungselement (3) in das geschlossene Profil (5) einschiebbar ist, so dass ein Kontakt zwischen dem Sicherungselement (3) und dem Zwischenelement (4) entsteht, und
**dadurch gekennzeichnet,**
**dass** durch den Kontakt zwischen dem Sicherungselement (3), dem Zwischenelements (4) und der Endplatte (2) ein geschlossener Kraftfluss aufbaubar ist, welcher die Endplatte (2) auf eine Funktionsfläche (6) des Systems (1) drückt.

2. Anordnung nach Patentanspruch 1, **dadurch gekennzeichnet, dass** Sicherungselement (3) keilförmig ausgestaltet ist.

3. Anordnung nach Patentanspruch 2, dadurch gekenntzeichnet, dass die schiefe Ebene des keilförmig ausgestalteten Sicherungselements (3) auf der der Endplatte (2) zugewandten Seite des Sicherungselements (3) ausgebildet ist.

4. Anordnung nach einem der Patentansprüchel bis 3, **dadurch gekennzeichnet, dass** die mit dem Sicherungselement (3) zusammenwirkende Seite des Zwischenelements (4) in einem Winkel (α) zu den angrenzenden Seiten des Zwischenelements (4) angeordnet ist, der von 90° abweicht.

5. Anordnung nach einem der Patentansprüche 1 bis 4, **dadurch gekennzeichnet, dass** das Einschieben des Sicherungselements (3) entlang einer quer zur Endplatte (2) verlaufenden Montagerichtung erfolgt.

6. Anordnung nach einem der Patentansprüche 1 bis 5, **dadurch gekennzeichnet, dass** das Sicherungselement (3) einen Feststellmechanismus (7) zur Positionssicherung aufweist.

7. Anordnung nach Patentanspruch 6, **dadurch gekennzeichnet, dass** das Sicherungselement (3) als Rastelement (8) ausgestaltet ist.

8. Anordnung nach Patentanspruch 7, **dadurch gekennzeichnet, dass** das Rastelement (8) mit einem Gegenstück (9) zusammenwirkt, das vorzugsweise am System (1) angeordnet ist.

9. Anordnung nach einem der Patentansprüche 1 bis 8, **dadurch gekennzeichnet, dass** das Zwischenelement (4) mit der Endplatte (2) verbindbar ist.

10. Anordnung nach Patentanspruch 9, **dadurch gekennzeichnet, dass** das die Verbindung des Zwischenelements (4) mit der Endplatte (2) durch eine Rastverbindung erfolgt.

11. Anordnung nach einem der Patentansprüche 1 bis 10, **dadurch gekennzeichnet, dass** das Sicherungselement (3), das Zwischenelement (4), die Endplatte (2) und/oder das System (1) aus Kunststoff und/oder Metall bestehen.

## Claims

1. An assembly comprising a system (1), an end plate (2) and a connecting module for connecting the system (1) to the end plate (2), including:
a closed profile (5) arranged on the system (1), a securing element (3) and an intermediate element (4) attached to the end plate (2), wherein
the securing element (3) being insertable into the closed profile (5) so that there is contact between the securing element (3) and the intermediate element (4), and
**characterized in that**
by means of the contact between the securing element (3), the intermediate element (4) and the end plate (2), a closed force flow can be generated which presses the end plate (2) onto a functional surface (6) of the system (1).

2. The assembly of claim 1, **characterized in that** the securing element (3) has a wedge-shaped configuration.

3. The assembly of claim 2, **characterized in that** the inclined plane of the securing element (3) having a wedge-shaped configuration is formed on the side of the securing element (3) that faces the end plate (2).

4. The assembly of any of claims 1 to 3, **characterized in that** the side of the intermediate element (4) cooperating with the securing element (3) is arranged, with respect to the adjacent sides of the intermediate element (4), at an angle (α) which is different from 90°.

5. The assembly of any of claims 1 to 4, **characterized in that** the securing element (3) is inserted along a mounting direction transverse to the end plate (2).

6. The assembly of any of claims 1 to 5, **characterized in that** the securing element (3) includes a locking mechanism (7) for securing its position.

7. The assembly of claim 6, **characterized in that** the securing element (3) is configured as a latch element (8).

8. The assembly of claim 7, **characterized in that** the latch element (8) cooperates with a counterpart (9) which preferably is arranged on the system (1).

9. The assembly of any of claims 1 to 8, **characterized in that** the intermediate element (4) is connectable to the end plate (2).

10. The assembly of claim 9, **characterized in that** the connection of the intermediate element (4) to the end plate (2) is accomplished by a latch connection.

11. The assembly of any of claims 1 to 10, **characterized in that** the securing element (3), the intermediate element (4), the end plate (2) and/or the system (1) are made of plastics and/or metal.

## Revendications

1. Disposition comportant un système (1), une plaque terminale (2) et un module de connexion destiné à la connexion du système (1) avec la plaque terminale (2), présentant :
un profilé fermé (5) disposé sur le système (1), un élément de fixation (3) et un élément intermédiaire (4) appliqué sur la plaque terminale (2),
l'élément de fixation (3) étant introductible dans le profilé fermé (5), de sorte qu'un contact se produit entre l'élément de fixation (3) et l'élément intermédiaire (4), et
**caractérisée en ce que**
par le contact entre l'élément de fixation (3), l'élément intermédiaire (4) et la plaque terminale (2), un flux de force fermé est établissable, qui presse la plaque terminale (2) sur une surface de fonction (6) du système (1).

2. Disposition selon la revendication 1, **caractérisée en ce que** l'élément de fixation (3) est façonné en forme de clavette.

3. Disposition selon la revendication 2, **caractérisée en ce que** le plan incliné de l'élément de fixation façonné en forme de clavette (3) est constitué sur le côté de l'élément de fixation (3) tourné vers la plaque terminale (2).

4. Disposition selon une quelconque des revendications 1 à 3, **caractérisée en ce que** le côté de l'élément intermédiaire (4) concourant avec l'élément de fixation (3) est disposé dans un angle (α) vers les côtés limitrophes de l'élément intermédiaire (4), qui se différencie de 90°.

5. Disposition selon une quelconque des revendications 1 à 4, **caractérisée en ce que** l'introduction de l'élément intermédiaire (3) s'effectue le long d'un sens de montage se produisant transversalement à la plaque terminale (2).

6. Disposition selon une quelconque des revendications 1 à 5, **caractérisée en ce que** l'élément de fixation (3) présente un élément de serrage (7) pour la fixation de position.

7. Disposition selon la revendication 6, **caractérisée en ce que** l'élément de fixation (3) est façonné comme élément encliquetable (8).

8. Disposition selon la revendication 7, **caractérisée en ce que** l'élément encliquetable (8) concourt avec un pendant (9), qui est disposé de préférence sur le système (1).

9. Disposition selon une quelconque des revendications 1 à 8, **caractérisée en ce que** l'élément intermédiaire (4) est connectable avec la plaque terminale (2).

10. Disposition selon la revendication 9, **caractérisée en ce que** la connexion de l'élément intermédiaire (4) avec la plaque terminal (2) s'effectue par une connexion encliquetable.

11. Disposition selon une quelconque des revendications 1 à 10, **caractérisée en ce que** l'élément de fixation (3), l'élément intermédiaire (4), la plaque terminale (2) et/ou le système (1) sont constitués en plastique et/ou en métal
